# EUROPÄISCHE PATENTSCHRIFT

(11) **EP 0 809 100 B1**
(45) Veröffentlichungstag und Bekanntmachung des Hinweises auf die Patenterteilung: **17.11.2004**
(21) Anmeldenummer: 97107121.2
(22) Anmeldetag: 29.04.1997
(51) Int. Cl.: G01N 27/12

(54) **Sensorelement und dessen Herstellungsverfahren zum Nachweis von Fluiden**
Sensor element for the detection of fluids and production method
Capteur pour la détection des fluides et méthode de production

(30) Priorität: 25.05.1996 DE 19621227
(43) Veröffentlichungstag der Anmeldung: 26.11.1997
(73) Patentinhaber: Micronas Semiconductor Holding AG, 8005 Zürich (CH)
(72) Erfinder: Igel, Günter, 79331 Teningen (DE)
(74) Vertreter: Hornig, Leonore, Dr.

(56) Entgegenhaltungen:
- WO-A-96/07094
- JP-A- 2 269 947
- US-A- 4 151 503
- US-A- 5 417 100
- US-A- 5 511 428

## Beschreibung

Die Erfindung betrifft ein Sensorelement zum Nachweis von flüssigen, gasförmigen oder fluiden Substanzen mit einer auf einem Substrat ausgebildeten Sensorschicht mit den Merkmalen des Oberbegriffs des Patentanspruchs 1, sowie ein Herstellungsverfahren eines solchen Sensorelements mit den Merkmalen des Patentanspruchs 8. Die Sensorschicht ist die Schicht, mit der die zu messende Substanz in ein meßbares Sensorsignal verwandelt wird. Die Sensorschicht kann aus einer zusammenhängenden Schicht eines geeigneten Materials, beispielsweise Zinnoxid, bestehen, oder Interdigitale Kondensatorstrukturen, Gatebereiche von Feldeffekttransistoren, Hallstrukturen etc. umfassen.

Ein solches Sensorelement ist aus der US 5 511 428 bekannt. Aus Patent Abstracts of Japan 02269947 ist ein Sensor zur Verbrennungsregelung bekannt. Mit einem solchen Sensor wird die Sauerstoffkonzentration in einem Abfallverbrennungsgas über einen langen Zeitraum gemessen. Ein Paar von Elektroden ist hierzu auf einem Grundkörper aufgebracht. Auf der als Kathode dienenden Elektrode ist ein weiterer Körper 4 aufgebracht, welcher aus MgO besteht und die Gasdiffusionsrate begrenzt.

WO9607094 offenbart ein Sensorelement und ein Verfahren zur Herstellung eines solchen Elements zum Nachweis der Qualität von Öl gemäß dem Oberbegriff von Anspruch 1 und 8, wobei anstatt der Sensorschicht die erste Kondensatorplatte eines Plattenkondensators auf dem Substrat ausgebildet ist. Die Seitenflächen des Substrats und des Plattenkondensators werden durch ein über das Sensorelement überstehendes Gehäuse begrenzt, wobei das Innere des Gehäuses durch einen zusätzlichen Dichtring vor eindringendem Öl geschützt wird.

Die elektrische Kontaktierung des Sensorelements führt zu einer Reihe von Schwierigkeiten. Die Sensorschicht muß zur Aufnahme von Meßwerten des Sensorelements mit äußeren elektrischen Kontakten verbunden werden. Diese Verbindung erfolgt üblicherweise mittels Bonddrähten. Hierzu werden Bondpads in einem räumlich sehr kleinem Abstand zu der Sensorfläche angeordnet. Dies führt in der Regel dazu, daß Bondpads und Bonddrähte während des Meßvorgangs mit der nachzuweisenden Substanz in Kontakt kommen. Dadurch wird die Zuverlässigkeit der Bondverbindungen erheblich beeinträchtigt. Andererseits ist es technisch sehr aufwendig, das Sensorelement so auszulegen, daß die Bondverbindungen nicht in Berührung mit der nachzuweisenden Substanz kommen. Ferner wird durch die Bondpads zusätzlich Fläche der Sensorschicht benötigt, da an der Stelle, an der der Bonddraht befestigt ist, eine Reaktion der Sensorschicht aufgrund der nachzuweisenden Substanz verhindert wird.

Bei Sensorelementen, für die eine Heizung benötigt wird, würde durch die Heizung die Zuverlässigkeit der Bondverbindung verringert. Ferner kann die Meßgenauigkeit des Sensorelements dadurch beeinträchtigt werden, daß ein Teil der nachzuweisenden Substanz, der nicht zu der Reaktion mit der Sensorfläche beiträgt, zu Reaktionen mit dem Bonddraht führt, die die Meßgenauigkeit wesentlich beeinträchtigen. Auch ist es aufwendig, das Sensorelement mit Geräten zu verbinden, mittels denen die nachzuweisende Substanz zugeführt wird, wie mit Pumpen, Ventile usw. Das Herstellen derartiger Sensorelemente ist zudem kostenaufwendig, da die Sensorelemente auf speziellen Chipträgern (Leadframes) befestigt werden müssen, und da die Montagetechnologie aufwendig ist, weil zur Durchführung verschiedener Verfahrensschritte einzelne Sensorelemente gehandhabt werden müssen.

Der Erfindung liegt die Aufgabe zugrunde, ein zuverlässiges, einfaches und kostengünstiges gattungsgemäßes Sensorelement sowie ein entsprechendes Herstellungsverfahren zu schaffen.

Diese Aufgabe wird durch ein gattungsgemäßes Sensorelement, mit den Merkmalen des Patentanspruchs 1 und durch ein gattungsgemäßes Verfahren mit den Merkmalen des Patentanspruchs 8 gelöst.

Aufgrund der erfindungsgemäßen Anordnung der Signalleitungseinrichtung sind auf der Vorderseite der Sensorschicht, auf die die zu messende Substanz aufgebracht wird, keine elektrischen Kontakte in Form von Bondpads und Bonddrähten erforderlich. Hierdurch wird eine Beeinträchtigung der Meßgenauigkeit des Sensorelements wie sie aufgrund der oben genannten Bondverbindungen zustande kommen kann, völlig ausgeschlossen. Die Sensorschicht und damit auch das Sensorelement können kleiner ausgebildet werden, da kein zusätzlicher Platz zum Aufbringen von Bondpads erforderlich ist. Dies trägt insbesondere dann, wenn für das Substrat ein teures Material verwendet wird, erheblich zur Kostenreduzierung bei. Zudem sind auch für viele Anwendungsfälle immer kleinere Sensoren wünschenswert, da dadurch Platz gespart werden kann. Die Zuverlässigkeit der Signalleitungseinrichtung wird auch durch eine Heizung des Sensors nicht beeinträchtigt, da die Heizung an einer anderen Stelle im Substrat angebracht werden kann. Zudem wird ein solcher Sensor auch dadurch billiger, daß kein zusätzlicher Chipträger erforderlich ist, da die Kontaktierung direkt an der Substratrückseite oder der/den Substratseitenflächen erfolgen kann. Auch wird eine Wechselwirkung der zu messenden Substanz mit der Signalleitungseinrichtung zuverlässig verhindert, da diese im Substrat verläuft.

Das Sensorelement kann dadurch weiter vereinfacht werden, daß in das Metall in den Hohlräumen direkt Kontaktstifte eingesetzt werden, mit denen das Sensorelement beispielsweise in eine Platine eingesetzt werden kann. Die Hohlräume sind besonders einfach herzustellen, wenn sie sich in einer Linie von der Rückseite der Sensorschicht bis zu der Substratrückseite erstrecken.

Durch die die Seitenfläche des Substrats begrenzende, über die Sensorschicht überstehende Schutzeinrichtung wird der Bereich, in dem sich die nachzuweisenden Substanz ausbreiten kann, räumlich begrenzt. Die Substanz wird daran gehindert, zu den außerhalb des Substrats liegenden Kontakten zu gelangen. Die Schutzeinrichtung ist gegenüber der Substanz abdichtend auf den Seitenflächen ausgebildet. Hierdurch wird sichergestellt, daß die gesamte verwendete Substanz auf der Oberfläche des Substrats bleibt. Auch geringe Menge werden daran gehindert, auf die Seitenfläche oder die Rückseite des Substrats und somit zu den elektrischen Kontakten zu gelangen. Es wird dadurch ein geringerer Teil der Substanz benötigt.

Gemäß einer vorteilhaften Weiterbildung des Sensorelements umfaßt die Signalleitungseinrichtung leitungsförmige Hohlräume zur Aufnahme von Signalleitungen, die sich von der Rückseite der Sensorschicht bis zu der Substratrückseite oder der/den Substratseitenfläche/n erstrecken. Die Hohlräume können mit einem Metall ausgefüllt sein. So wird eine einfache, zuverlässige, elektrische Verbindung zwischen der Sensorfläche und äußeren elektrischen Kontakten möglich.

Gemäß einer vorteilhaften Weiterbildung der Erfindung erstreckt sich die Sensorschicht im wesentlichen über den gesamten Querschnitt des Substrats. Das obere Ende der Schutzeinrichtung kann mit einer Anschlußeinrichtung versehen sein. Dann ist es besonders einfach die Substanz gezielt zuzuführen. Die Substanz kann dabei ohne Verluste zugeführt werden. Es kann zudem in der Anschlußeinrichtung auch eine Abführeinrichtung für den Anteil der Substanz angeordnet werden, welcher nicht zum Nachweis und zu der Reaktion auf der Sensorfläche verwendet wird.

Gemäß einem bevorzugten Ausführungsbeispiel ist das Substrat ein Halbleitersubstrat. Gemäß einem anderen Ausführungsbeispiel ist das Substrat ein Glassubstrat.

Im folgenden wird die Erfindung anhand der Figur näher erläutert.

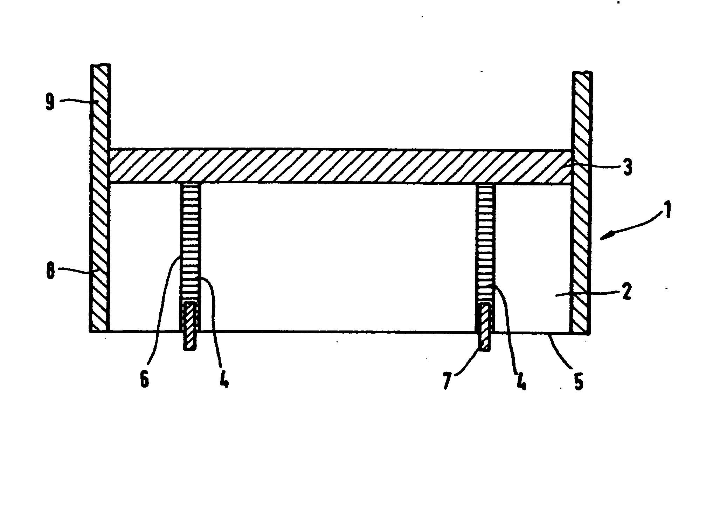

Die Fig. 1 zeigt ein erfindungsgemäßes Sensorelement im Querschnitt.

Das Sensorelement 1 weist ein Substrat 2 auf, auf dessen Vorderseite eine Sensorschicht 3 aufgebracht ist. Die Sensorschicht 3 überdeckt den gesamten Querschnitt des Substrats 1. In dem Substrat 2 sind zwei Signalleitungen 4 derart angeordnet, daß sie die dem Substrat 1 zugewandte Rückseite der Sensorschicht 3 mit der Substratrückseite 5 verbinden. Die Signalleitungen 4 liegen in leitungsförmigen, hier zylinderförmigen, Hohlräumen 6 und bestehen aus einem Metall, mit welchem die Hohlräume 6 ausgefüllt sind. Von der Substratrückseite 5 sind Kontaktstifte 7 in die Hohlräume 6 eingebracht und fest mit dem in den Hohlräumen 6 vorhandenen Metall verbunden. Das Substrat 2 und die Sensorschicht 3 sind von einer Schutzeinrichtung 8 umgeben, welche, vorzugsweise gegenüber der Substanz abdichtend, auf den Substratseitenflächen ausgebildet ist. Dabei steht die Schutzeinrichtung 8 über die Oberfläche der Sensorschicht 3 über. Die Länge des überstehenden Teiles 9 der Schutzeinrichtung 8 über der Sensorschicht 3 wird abhängig von der zu messenden Substanz gewählt. Wesentlich ist dabei, daß verhindert wird, daß die zu messende Substanz auf die Rückseite des Sensorelements 1 gelangt, wo sich die elektrischen Kontakte, hier die Kontaktstife 7, befinden. Das überstehende Teil 9 der Schutzeinrichtung 8 kann mit einer Anschlußeinrichtung versehen sein, an die Geräte zum Zuführen bzw. Abführen der zu messenden Substanz, wie Pumpen, Ventile usw., angeschlossen werden können.

Zur Herstellung des erfindungsgemäßen Sensorelements wird die Sensorschicht 3 auf dem Substrat 2 in herkömmlicher Weise aufgebracht. Bei sehr kleinen Sensorelementen, insbesondere in der Halbleitertechnologie, ist es oft üblich, mehrere Sensorelemente 1 in einem Körper herzustellen. Nach herkömmlichen Verfahren wird dann, wenn dies erforderlich ist, die Rückseite des Körpers abgedünnt und weitere geeignete Verfahrensschritte durchgeführt. Dann werden die Hohlräume 6 in den Sensorelementen 1 ausgebildet und mit einem geeigneten Metall gefüllt. Die Kontaktstife 7 werden an den Signalleitungen 4, beispielsweise durch Löten, Schweißen, Kleben etc., befestigt. Dann werden die Sensorelemente 1 voneinander getrennt. Danach wird die Schutzeinrichtung 8 auf den Seitenflächen der einzeln vorliegenden Sensorelemente aufgebracht. Die Schutzeinrichtung 8 kann beispielsweise ein Schrumpfschlauch sein, der durch Wärmebehandlung auf den Seitenflächen des Substrats 2 abdichtend gegenüber der Substanz befestigt wird. Die Schutzeinrichtung 8 kann beispielsweise auch durch eine Preßpassung eines Metalls erzeugt werden.

## Patentansprüche

1. Sensorelement zum Nachweis von flüssigen, gasförmigen oder fluiden Substanzen mit einer auf einem Substrat (7) ausgebildeten Sensorschicht (3), bei welcher eine Signalleitungseinrichtung zum Leiten eines Sensorsignals in dem Substrat (2) derart angeordnet ist, dass sie die dem Substrat (2) zugewandte Rückseite der Sensorschicht (3) mit der Substratrückseite (5) verbindet, **dadurch gekennzeichnet, dass** eine die Seitenflächen des Substrats (2) begrenzende, über die Sensorschicht überstehende, hinsichtlich der nachzuweisenden Substanzen abdichtende Schutzeinrichtung (8) ausgebildet ist.

2. Sensorelement nach Anspruch 1, **dadurch gekennzeichnet, dass** die Signalleitungseinrichtung leitungsförmige Hohlräume (6) zur Aufnahme von Signalleitungen (4) umfasst, die sich von der Rückseite der Sensorschicht bis zu der Substratrückseite (5) oder bis zu der/den Substratseitenfläche/n erstrecken.

3. Sensorelement nach Anspruch 1 oder 2, **dadurch gekennzeichnet, dass** die Hohlräume (6) mit einem Metall ausgefüllt sind.

4. Sensorelement nach einem der vorangehenden Ansprüche, **dadurch gekennzeichnet, dass** sich die Sensorschicht (3) im wesentlichen über den gesamten Querschnitt des Substrats (2) erstreckt.

5. Sensorelement nach einem der vorangehenden Ansprüche, **dadurch gekennzeichnet, dass** das obere Ende der Schutzeinrichtung (8) mit einer Anschlusseinrichtung versehen ist.

6. Sensorelement nach einem der vorangehenden Ansprüche, **dadurch gekennzeichnet, dass** das Substrat (2) ein Halbleitersubstrat ist.

7. Sensorelement nach einem der vorangehenden Ansprüche, **dadurch gekennzeichnet, dass** das Substrat (2) ein Glassubstrat ist.

8. Verfahren zum Herstellen eines Sensorelements zum Nachweis von flüssigen, gasförmigen oder fluiden Substanzen, bei dem auf einem Substrat eine Sensorschicht und in dem Substrat eine Signalleitungseinrichtung zum Leiten eines Sensorsignals derart ausgebildet werden, dass die Signalleitungseinrichtung die dem Substrat zugewandte Rückseite der Sensorschicht mit der Substratrückseite oder der Substratseitenflächen verbindet, **dadurch gekennzeichnet, dass** eine die Seitenflächen des Substrats begrenzende, über die Sensorschicht überstehende, hinsichtlich der nachzuweisenden Substanz abdichtende Schutzeinrichtung ausgebildet wird.

## Claims

1. A sensing element for sensing liquid, gaseous or fluid substances with a sensing layer (3) formed on a substrate (2) in which a signal line device for conducting a sensor signal is disposed in such a way as to connect the back of the sensing layer (3), which faces the substrate (2), to the back (5) of the substrate (2), **characterized in that** a protective device (8) is provided which delimits the lateral surfaces of the substrate (2), projects beyond the sensing layer, and provides a seal against substances to be sensed.

2. A sensing element as claimed in claim 1, **characterized in that** the signal line device comprises line-shaped hollow spaces (6) for receiving signal lines (4) which extend from the back of the sensing layer to the back (5) of the substrate or to the lateral surface/surfaces of the substrate.

3. A sensing element as claimed in claim 1 or 2, **characterized in that** the hollow spaces (6) are filled with a metal.

4. A sensing element as claimed in any one of the preceding claims, **characterized in that** the sensing layer (3) extends substantially over the entire cross section of the substrate (2).

5. A sensing element as claimed in any one of the preceding claims, **characterized in that** the upper end of the protective device (8) is provided with a connecting device.

6. A sensing element as claimed in any one of the preceding claims, **characterized in that** the substrate (2) is a semiconductor substrate.

7. A sensing element as claimed in any one of the preceding claims, **characterized in that** the substrate (2) is a glass substrate.

8. A process for manufacturing a sensing element for sensing liquid, gaseous or fluid substances wherein a sensing layer is formed on a substrate and wherein a signal line device for conducting a sensor signal is formed in the substrate in such a way as to connect the back of the sensing layer, which faces the substrate, to the back of the substrate or to the lateral surfaces of the substrate, **characterized in that** a protective device is formed which delimits the lateral surfaces of the substrate, projects beyond the sensing layer, and provides a seal against the substance to be sensed.

## Revendications

1. Elément capteur pour la mise en évidence de substances liquides, gazeuses ou fluides, comportant une couche de capteur (4) réalisée sur un substrat (7), dans lequel un circuit d'acheminement des signaux pour acheminer un signal de capteur est agencé dans le substrat (2) de telle sorte qu'il relie à la face postérieure de substrat (5) la face postérieure, tournée vers le substrat (2), de la couche de capteur (3), **caractérisé en ce qu'**est réalisé un dispositif de protection (8) limitant les surfaces latérales du substrat (2), faisant saillie au-delà de la couche de capteur et fournissant un étanchement vis-à-vis des substances à mettre en évidence.

2. Elément capteur selon la revendication 1, **caractérisé en ce que** le circuit d'acheminement des signaux comprend des cavités (6) en forme de conduits (6) destinés à recevoir des lignes de signaux (4), lesquelles s'étendent depuis la face postérieure de la couche de capteur jusqu'à la face postérieure de substrat (5) ou jusqu'à la/les surface(s) latérales(s) de substrat.

3. Elément capteur selon l'une ou l'autre des revendications 1 et 2, **caractérisé en ce que** les cavités (6) sont remplies d'un métal.

4. Elément capteur selon l'une des revendications précédentes, **caractérisé en ce que** la couche de capteur (3) s'étend sensiblement sur toute la section transversale du substrat (2).

5. Elément capteur selon l'une des revendications précédentes, **caractérisé en ce que** l'extrémité supérieure du dispositif de protection (8) est pourvue d'un dispositif de raccordement.

6. Elément capteur selon l'une des revendications précédentes, **caractérisé en ce que** le substrat (2) est un substrat en semi-conducteur.

7. Elément capteur selon l'une des revendications précédentes, **caractérisé en ce que** le substrat (2) est un substrat en verre.

8. Procédé de fabrication d'un élément capteur pour la mise en évidence de substances liquides, gazeuses ou fluides, dans lequel une couche de capteur est réalisée sur un substrat, et un circuit d'acheminement des signaux pour acheminer un signal de capteur est réalisé dans le substrat de telle sorte que le circuit d'acheminement des signaux relie à la face postérieure de substrat ou aux surfaces latérales du substrat la face postérieure, tournée vers le substrat, de la couche de capteur, **caractérisé en ce qu'**est réalisé un dispositif de protection limitant les surfaces latérales du substrat, faisant saillie au-delà de la couche de capteur et fournissant un étanchement vis-à-vis des substances à mettre en évidence.
